# EUROPÄISCHE PATENTANMELDUNG

(11) **EP 0 627 166 A1**
(43) Veröffentlichungstag der Anmeldung: **07.12.1994**
(21) Anmeldenummer: 94105224.3
(22) Anmeldetag: 02.04.1994
(51) Int. Cl.: A21C 7/00, A21C 11/00, A21C 3/00

(54) **Vorrichtung und Verfahren zur Herstellung und Verarbeitung von Schüttelbrotteig**

(30) Priorität: 07.04.1993 DE 4311410
(71) Anmelder: Gasser, Christian, I-39040 Villanders (IT); Gasser, Thomas, I-39040 Villanders (IT)
(72) Erfinder: Gasser, Christian, I-39040 Villanders (IT); Gasser, Thomas, I-39040 Villanders (IT)
(74) Vertreter: Eikam, Helmut Anton

(57) **Zusammenfassung**

Eine Maschine zur Herstellung von Schüttelbrot besteht aus einem Grundgestell (1), an dessen einer Seite ein Pneumatikzylinder (2) an einer verstellbaren Lagerung (3) sowie an dessen anderer Seite eine Arbeitsplatte (4) in einer Drehachse (5) gelagert ist und auf der gegenüberliegenden Seite der Arbeitsplatte der Kolben (2a) des Pneumatikzylinders an einer ebenfalls verstellbaren Lagerung (7) angreift, wobei auf der Arbeitsplatte (4) um eine Rotationsachse (8) ein von einem Motor (9) angetriebener, der Aufnahme des zu schüttelnden Teiges dienender Drehteller (10) drehbar gelagert ist, wobei auf der Arbeitsplatte (4) ein Entnahmeteller (12) gelagert ist, der durch einen, an der Unterseite der Arbeitsplatte (4) befindlichen Pneumatikzylinder (14) über einen Hebel (13) um eine Drehachse (16) eine Schwenkbewegung ausführt, mittels derer der geschüttelte Teig vom Drehteller entfernt wird.

Der auf der Arbeitsplatte montierte, vom Motor (9) angetriebene Drehteller (19) dreht sich um eine Rotationsachse (8), wobei die Rotationsgeschwindigkeit sowie der Abstand der Rotationsachse (8) des Drehtellers (10) zur Drehachse (5) des Grundgestells (1) durch eine verstellbare Lagerung (11) der Arbeitsplatte (4) verändert werden können. Die Bodenseite des Pneumatikzylinders (2) ist am Grundgestell in einer verstellbaren Lagerung (3) gelagert und der Angriffspunkt des Pneumatikkolbens (2a) an der Arbeitsplatte (4) ist in Bezug zu dessen Drehachse (5) im Grundgestell (1) in einer weiteren Lagerung (6) verstellbar gelagert. Mittels einer elektronisch-pneumatischen Steuerung kann die Hublänge des Pneumatikkolbens (2a) , die Hubgeschwindigkeit (Anzahl der Arbeitshübe pro Sekunde), die Ausfahr- und Einziehgeschwindigkeit des Pneumatikkolbens (2a) sowie der Abstand der Hubzeiten sowie Hubpausen zwischen den einzelnen Hüben unabhängig voneinander verändert bzw. verstellt werden. Ein Entnahmeteller (12) ist in einer, parallel zur Rotationsachse (8) außerhalb des Drehtellers (10) befindlichen Drehachse (16) drehbar gelagert und kann um die Drehachse (16) über einen Hebel (13) mittels eines elektronisch-pneumatisch gesteuerten Pneumatikkolbens (14), dessen anderes Ende an einem Aufnahmelager (15) an der Unterseite der Arbeitsplatte (4) gelagert ist, eine Schwenkbewegung ausführen, durch die der geschüttelte Teil vom Drehteller (10) entfernt wird.

## Beschreibung

Die Erfindung betrifft eine Vorrichtung zur Herstellung von Schüttelbrotteig gemäß dem Oberbegriff das Anspruches 1.

Vornehmlich in Südtirol werden Backwaren unter der Bezeichnung "Schüttelbrot" hergestellt. Dieses Brot zeichnet sich durch lange Haltbarkeit sowie dadurch aus, daß es auch nach längerer Lagerzeit knusprig und frisch bleibt. Dies wird durch das besondere Verfahren der Zubreitung des Brotteiges erreicht. Der Teig wird zunächst mit herkömmlichen Treibmitteln aufbereitet. Nachdem der Brotfladen "aufgegangen" ist, wird dieser Prozeß durch einen Schüttelvorgang unterbunden. Dadurch wird bewirkt, daß das Brot bei dem anschließenden Backvorgang nicht mehr weiter "aufgeht". Der Brotfladen bleibt auch während des Backvorganges flach.

Dieser Schüttelvorgang wird herkömmlicherweise von Hand verrichtet. Dabei schüttelt der Bäcker den Brotfladen. Je nach Zusammensetzung des Brotteiges erfordert dieser Vorgang eine bestimmte Dauer sowie einen bestimmten Takt des Schüttelns.

Die erfindungsgemäße Vorrichtung ersetzt diese mühevolle Handarbeit. Der Schüttelvorgang wird von der Maschine verrichtet. Diese Aufgabe wird gemäß der Erfindung durch die im kennzeichneden Teil des Anspruchs 1 angegebenen Merkmale gelöst.

Der geformte, aufgegangene Teigfladen kommt auf den Drehteller (10) der Vorrichtung zu liegen. Nun beginnt der Schüttelvorgang. Je nach Konsistenz des Teiges ist eine bestimmte Dauer des Schüttelvorganges erforderlich.Diese Schütteldauer wird bei der Installation des Gerätes bzw. zu Beginn des Arbeitsvorganges eingestellt.Dies geschieht in der Weise, daß die Hublänge des Pneumatikkolbens, die Hubfrequenz sowie die Anzahl der je Arbeitsgang erforderlichen Hübe über ein elektronisches Steuergerät eingestellt wird. Die Schüttelbewegung wird durch den Pneumatikkolben (2a) erzeugt. Der ein- und ausfahrende Kolben (2a) erzeugt dabei die Schüttelbewegung. Auf dem von einem Elektormotor (9) angetriebenen Drehteller (10) rotiert der vorgeformte und gegorene Teig. Durch diese Rotationsbewegung sowie die zusätzliche Schüttelbewegung wird der Teig gleichmäßig auseinandergetrieben.

Durch die Hin- und Herbewegung des Pneumatikkolbens (2a) wird die Arbeitsplatte (4) der Vorrichtung auf und ab bewegt. Diese Arbeitplatte (4) ist auf der einen Seite mit dem Grundgestell (1) um eine Drehachse (5) drehbar gelagert. Auf der anderen Seite befindet sich eine verstellbare Lagerung (7) zur Aufnahme des Pneumatikkolbens (2a). Diese Verstellbarkeit des Aufnahmepunktes des Pneumatikkolbens ermöglicht es, den Abstand von der Drehachse (5) des Schütteltisches zum Angriffspunkt des Pneumaticzylinders (7) zu verändern. Dadurch kann die Amplitude des Schütteltisches verändert werden.

Mittels der elektronisch - pneumatischen Steuerung ist es ferner möglich, die Ausfahr- und Einziehgeschwindigkeit des Kolbens unabhängig voneinander zu verstellen. Sie ermöglicht es ferner, eine Verstellbarkeit der Hubzeiten zu erreichen sowie die Dauer zwischen den einzelnen Hüben beliebig zu variieren.

Die Vorrichtung besitzt ferner einen Entnahmeteller (12). Dieser ist auf der Arbeitsplatte (4) in einer Drehachse (8) gelagert. Er ist so ausgebildet, daß er nach Beendigung des Schüttelvorganges zwischen Drehteller (10) und den darauf befindlichen Teigfladen einschwenkt. Mit einer weiteren Schwenkbewegung wird der Brotfladen sodann vom Drehteller entfernt. Dieser Schwenkvorgang wird durch einen an der Unterseite der Arbeitsplatte (4) befindlichen Pneumatikzylinder (14) erzeugt. Die Bewegung des Pneumatikkolbens erzeugt über einen Hebel (13) sowie die Drehachse (16) die Schwenkbewegung.

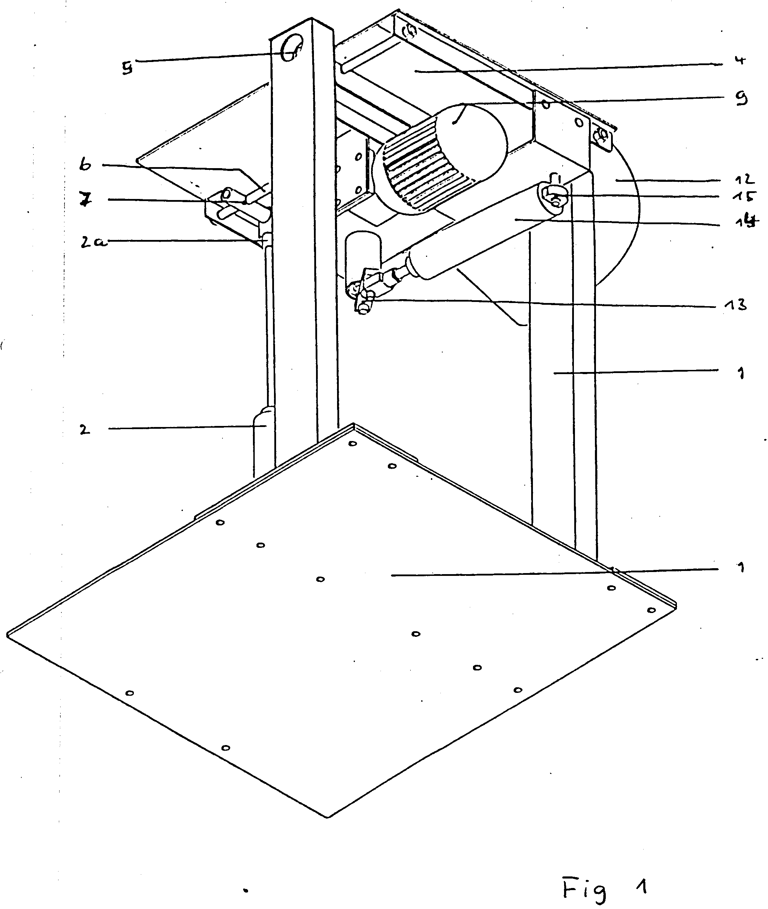

Die Erfindung wird nachstehend anhand eines Ausführungsbeispieles im einzelnen erläutert. Es zeigt
Figur 1 eine perspektivische Ansicht der Vorrichtung von unten,

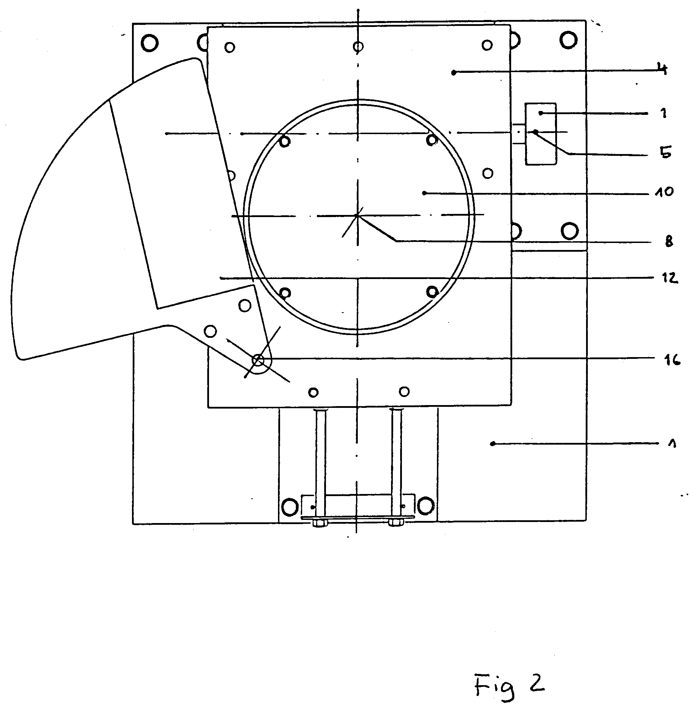

Figur 2 eine Ansicht der Vorrichtung von oben (Draufsicht),

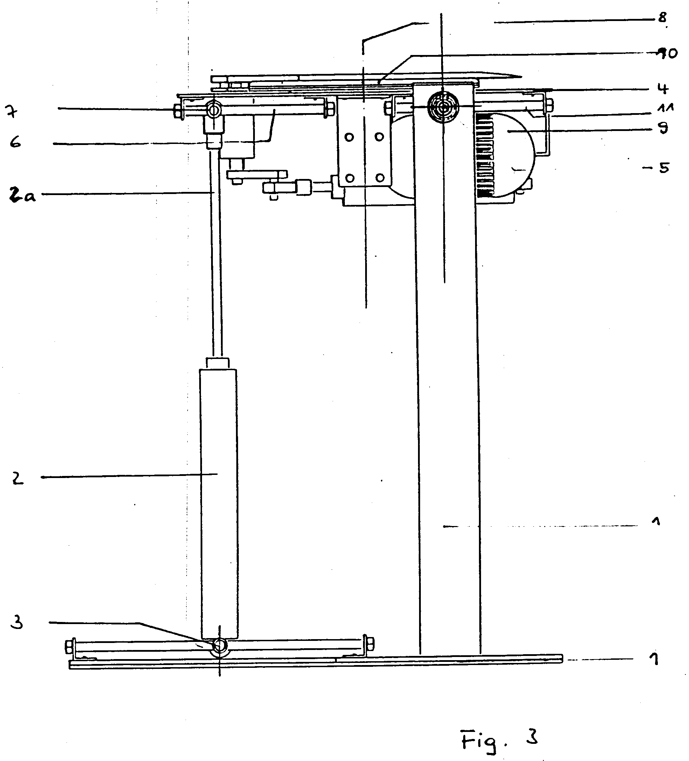

Figur 3 eine Ansicht der Vorrichtung von der Seite (Seitenansicht)

Die als Ausführungsbeispiel dargestellte Vorrichtung besteht aus einem Grundgestell (1). Auf einer Seite des Grundgestelles ist eine verstellbare Lagerung (3) angebracht, welche der Aufnahme des Zylinderbodens des Pneumaticzylinders (2) dient. Auf der gegenüberliegenden Seite des Grundgestells befindet sich die Lagerung einer Drehachse (5). Diese dient zur Aufnahme der verstellbaren Lagerung (11) der Arbeitsplatte (4). Auf der Arbeitsplatte (4) ist um eine Rotationsachse (8) ein von einem Elektromotor (9) angetriebener Drehteller (10) drehbar gelagert. Am Ende der Grundplatte befindet sich an der Unterseite ein weiteres Lager (6). Es dient der Aufnahme des Pneumatickolbens (2a).

Durch die Verstellbarkeit des Aufnahmelagers (11) kann die Entfernung zwischen Rotationsachse (8) des Drehtellers (4) zur Drehachse (5) verändert werden. Durch die Verstellbarkeit des Lagers (6) des Pneumatickolbens (2a) kann die Entfernung des Angriffspunktes des Pneumatickolbens (7) zur Drehachse (5) der Arbeitsplatte verändert werden. Durch die Verstellbarkeit des Lagers (3) am Grundgestell (1) kann erreicht werden, daß der die Schüttelbewegung erzeugende Pneumatikzylinder (2) stets vertikal ausgerichtet ist.

Der Entnahmeteller ist auf der Arbeitsplatte (4) in einer Drehachse (8) drehbar gelagert. An der Unterseite der Arbeitsplatte (4) ist in einer Lagerung (15) der ein weiterer Pneumatikzylinder montiert, dessen Axialbewegung über den Hebel (13) und die Drehachse (16) die Schwenkbewegung des Entnahmetellers (12) erzeugt

## Patentansprüche

1. Vorrichtung und Verfahren zur Herstellung bzw. zur Verarbeitung von Schüttelbrotteig, bestehend aus einem Grundgestell (1), an dessen einer Seite ein Pneumatikzylinder (2) an einer verstellbaren Lagerung (3) sowie an dessen anderer Seite eine Arbeitsplatte (4) in einer Drehachse (5) gelagert ist und auf der gegenüberliegenden Seite der Arbeitsplatte der Kolben (2a) des Pneumatikzylinders an einer ebenfalls verstellbaren Lagerung (7) angreift, wobei auf der Arbeitsplatte (4) um eine Rotationsachse (8) ein von einem Motor (9) angetriebener, der Aufnahme des zu schüttelnden Teiges dienender Drehteller (10) drehbar gelagert ist, wobei auf der Arbeitsplatte (4) ein Entnahmeteller (12) gelagert ist, der durch einen, an der Unterseite der Arbeitsplatte (4) befindlichen Pneumatikzylinder (14) über einen Hebel (13) um eine Drehachse (16) eine Schwenkbewegung ausführt, mittels derer der geschüttelte Teig vom Drehteller entfernt wird, dadurch gekennzeichnet, daß der auf der Arbeitsplatte montierte, von dem Motor (9) angetriebene Drehteller (10) sich um die Rotationsachse (8) dreht,

2. Vorrichtung nach Anspruch 1, dadurch gekennzeichnet, daß die Rotationsgeschwindigkeit des Tellers verändert werden kann,

3. Vorrichtung nach Anspruch 1, dadurch gekenntzeichnet, daß der Abstand der Rotationsachse (8) des Drehtellers (10) zur Drehachse (5) des Grundgestells (1) durch eine verstellbare Lagerung (11) der Arbeitsplatte (4) verändert werden kann,

4. Vorrichtung nach Anspruch 1, dadurch gekennzeichnet, daß die Bodenseite des Pneumatikzylinders (2) am Grundgestell in einer verstellbaren Lagerung (3) gelagert ist,

5. Vorrichtung nach Anspruch 1, dadurch gekennzeichnet, daß der Angriffspunkt des Pneumatikkolbens (2a) an der Arbeitsplatte (4) in Bezug zu dessen Drehachse (5) im Grundgestell (1) in einem weiteren Lager (6) verstellbar gelagert ist,

6. Vorrichtung nach Anspruch 1, dadurch gekenntzeichnet, daß mittels einer elektronisch-pneumatischen Steuerung die Hublänge des Pneumatikkolbens (2a) verändert werden kann,

7. vorrichtung nach Anspruch 1, dadurch gekennzeichnet, daß mittels einer elektronisch-pneumatischen Steuerung die Hubgeschwindigkeit (Anzahl der Arbeitshöhe pro Sekunde) verändert werden kann,

8. Vorrichtung nach Anspruch 1, dadurch gekennzeichnet, daß mittels einer elektronisch-pneumatischen Steuerung die Ausfahr- und Einziehgeschwindigkeit des Pneumatikkolbens (2a) verändert werden kann,

9. Vorrichtung nach Anspruch 1, dadurch gekennzeichnet, daß mittels einer elektronisch-pneumatischen Steuerung der Abstand der Hubzeiten sowie Hubpausen zwischen den einzelnen Hüben unabhängig voneinander verstellt werden kann,

10. Vorrichtung nach Anspruch 1, dadurch gekennzeichnet, daß der Entnahmeteller (12) in einer, parallel zur Rotationsachse (8) außerhalb des Drehtellers (10) befindlichen Drehachse (16) drehbar gelagert ist,

11. Vorrichtung aus Anspruch 1, dadurch gekennzeichnet, daß der Entnahmeteller (12) um die Drehachse (16) über einen Hebel (13) mittels eines elektronisch-pneumatisch gesteuerten Pneumatikkolbens (14), dessen anderes Ende an einem Aufnahmelager (15) an der Unterseite der Arbeitsplatte (4) gelagert ist, eine Schwenkbewegung ausführen kann, durch die der geschüttelte Teig vom Drehteller (10) entfernt wird.
